# EUROPEAN PATENT APPLICATION

(11) **EP 3 103 857 A1**
(43) Date of publication of application: **14.12.2016**
(21) Application number: 15747002.2
(22) Date of filing: 06.02.2015
(51) Int. Cl.: C10B 53/00, B09B 3/00, C02F 11/10, C02F 11/12, C10B 53/02, C10B 57/10, C10L 5/44, C10L 5/46

(54) **CARBONIZATION METHOD**

(30) Priority: 07.02.2014 JP 2014022184
(71) Applicant: Maywa Co. Ltd., Kanazawa city, Ishikawa 920-0211 (JP)
(72) Inventor: KITANO Shigeru, Kanazawa city Ishikawa 920-0211 (JP)
(74) Representative: TBK
(86) International application number: PCT/JP2015/053322
(87) International publication number: WO 2015/119228

(57) **Abstract**

The present invention provides a carbonization method that can efficiently perform a carbonization processing using dry-distillation of high moisture biomass without adding a major improvement to an existing carbonization apparatus.

The carbonization method of the present invention in which three processes are performed continuously for a predetermined period which including: a first process of obtaining low moisture biomass-origin carbonization fuel and dry-distilled gas by thermally decomposing low moisture biomass in a carbonization oven; a second process of obtaining dried biomass by drying high moisture biomass in a drying machine using high-temperature gas obtained by secondary combustion of the dry-distilled gas obtained in the first process; and a third process of storing the dried biomass obtained in the second process, and thereafter three processes are performed continuously for a predetermined period which includes: a fourth process of obtaining high moisture biomass origin-carbonization fuel and dry-distilled gas by thermally decomposing the stored dried biomass in the same carbonization oven as the one used in the first process; a fifth process of obtaining dried biomass by drying high moisture biomass in the drying machine using high-temperature gas obtained by secondary combustion of the dry-distilled gas obtained in the fourth process; and a sixth process of storing the dried biomass obtained in the fifth process.

## Description

### TECHNICAL FIELD

The present invention relates to a carbonization method of carbonizing biomass containing a lot of moisture through dry-distillation. Specifically, the invention relates to a carbonization method in which carbonization processing can be performed efficiently without adding a major improvement to an existing carbonization apparatus.

### BACKGROUND ART

With the rise of an environmental awareness in recent years, technologies are being developed for thermally decomposing biomass by dry-distillation under nearly non-oxygen atmosphere to generate combustion gas such as carbon monoxide, hydrogen, and methane, and to obtain charcoal as solid fuel, where biomass such as sludge, livestock feces/urine, and food residue were conventionally incinerated or reclaimed.

Among the biomass, moisture of those containing high moisture such as sludge needs to be reduced by using heat drying as pretreatment of dry-distillation. However, there are problems that fuel cost increases when combustion heat of fossil fuel such as lamp oil is used, and a long time is needed when natural energy, such as sunlight and wind force, or fermentation heat is used.

For example, PTL 1 discloses a manufacturing method of carbonization fuel including: a first carbonization process for obtaining first-process carbonization fuel and dry-distilled gas by dry-distilling low moisture biomass; a drying process for obtaining dried biomass by drying high moisture biomass using high-temperature combustion exhaust gas generated by combustion of the dry-distilled gas obtained in the first carbonization process; and a second carbonization process for obtaining second-process carbonization fuel by dry-distilling the dried biomass obtained in the drying process.

### Citation List

### Patent Literature

PTL 1: JP 2010-241936 A1

### Summary of Invention

### Technical Problem

However, the technology disclosed in PTL 1 has the following problems.

That is, there is a problem that two carbonization ovens are necessary because different carbonization ovens (dry-distillation ovens) are used in the respective first and second carbonization processes, and an existing apparatus equipping only one carbonization oven cannot be utilized, or an apparatus becomes larger.

PTL 1 further discloses a technology in which dried biomass is conveyed to a carbonization oven containing low moisture biomass and dry-distillation is performed after the mixture of low moisture biomass and dried biomass in the carbonization oven. However, this requires an additional conveyer or mixer, and the problem that the existing apparatus cannot be utilized or the problem that the apparatus becomes larger cannot be solved.

The present invention is made in view of the above problems, and an object of the invention is to provide a carbonization method in which carbonization processing using dry-distillation of high moisture biomass can be efficiently performed without adding a major improvement to the existing carbonization apparatus.

### Solution to Problem

In the carbonization method of the present invention, three processes are performed continuously for a predetermined period including: a first process of obtaining low moisture biomass-origin carbonization fuel and dry-distilled gas by thermally decomposing low moisture biomass in a carbonization oven; a second process of obtaining dried biomass by drying high moisture biomass in a drying machine using high-temperature gas obtained by secondary combustion of the dry-distilled gas obtained in the first process; and a third process of storing the dried biomass obtained in the second process, and thereafter three processes are performed continuously for a predetermined period including: a fourth process of obtaining high moisture biomass-origin carbonization fuel and dry-distilled gas by thermally decomposing the stored dried biomass in the same carbonization oven as the one used in the first process; a fifth process of obtaining dried biomass by drying the high moisture biomass in the drying machine using high-temperature gas obtained by secondary combustion of the dry-distilled gas obtained in the fourth process; and a sixth process of storing the dried biomass obtained in the fifth process.

The high moisture biomass is organic waste containing at least one of sludge, livestock feces/urine, and food residue.

The low moisture biomass is organic waste containing at least one of chaff, palm kernel shell, and wood.

### Advantageous Effects of Invention

One of the characteristics of the carbonization method of the present invention is to perform the above mentioned first through third processes continuously for a predetermined period. There is an advantage that pure carbonization fuel containing low moisture biomass only can be obtained by performing the first through third processes continuously for a predetermined period using only the low moisture biomass which does not need to be dried. Further, there is an advantage that high-temperature gas generated by secondary combustion of the dry-distilled gas obtained in the first process can be used for drying the high moisture biomass. This also leads to an advantage that workload for mixing low moisture biomass with high moisture biomass to reduce the moisture becomes unnecessary. An example of the pure carbonization fuel, which solely contains low moisture biomass, is calcined rice chaff.

The "predetermined period", in the case of performing the first through third processes continuously for a predetermined period, varies according to the actual moisture percentage and material of the low moisture biomass and the high moisture biomass, and processing abilities of the carbonization oven and drying machine. However, in the case where the carbonization processing is in span of one week, for example, the first two days correspond to the "predetermined period". Dried biomass (made by drying high moisture biomass) which will be used (consumed) in the rest five days of the week is manufactured in these two days by executing the first through third processes continuously and repeatedly, and is then stored as stock. As a matter of course, the "predetermined period" is not limited to the first two days. It can be first 30 hours, or it can be the first day if the carbonization processing is set to a three-day span. Furthermore, morning hours in a day can be the "predetermined period". In such a case, the first through third processes can be performed in the morning for manufacturing the low moisture biomass-origin carbonization fuel and storing the dried biomass. Thereafter, the high moisture biomass-origin carbonization fuel is manufactured by executing the fourth through sixth processes, which will be discussed next, and the stock of dried biomass is thereby replenished.

Further, the other characteristics of the present invention is to perform the fourth through sixth processes continuously for a predetermined period. There is an advantage that pure carbonization fuel containing high moisture biomass only can be obtained by performing fourth through sixth processes continuously for a predetermined period using only the high moisture biomass-origin dried biomass. Further, there is an advantage that the high moisture biomass in the drying machine can be dried in a short time because the dry-distilled gas which is obtained by thermally decomposing the dried biogas with sufficiently low moisture percentage has high heat quantity.

The "predetermined period", in the case of performing the fourth through sixth processes continuously for a predetermined period varies according to the actual moisture percentage and material of the high moisture biomass and the dried biomass, and processing abilities of the carbonization oven and the drying machine. However, in the case where the carbonization processing is in span of one week and the first through third processes is executed continuously and repeatedly in the first two days, for example, the rest five days of the week corresponds to the "predetermined period". As a matter of course, the "predetermined period" is not limited to the rest five days. For example, it can be the remainder hours of the week in the case where the first through third processes are performed continuously for the first 30 hours, it can be the remainder two days after the first day in the case where the carbonization processing is performed in a three-day span. Furthermore, the first through third processes can be performed in the morning of a day and the fourth through sixth processes can be performed in the remainder hours of the day as mentioned above.

As discussed above, in the carbonization method of the present invention, the carbonization processing based on dry-distillation of high moisture biomass can be executed without adding a major improvement to an existing carbonization apparatus such that the thermal decomposition of the low moisture biomass and the high moisture biomass (dried biomass) are performed in the same carbonization oven, for example. Further, carbonization processing can be executed efficiently because the dry-distilled gas generated during the thermal decomposition of the low moisture biomass is used for drying the high moisture biomass instead of using fossil fuel such as lamp oil, natural energy such as sunlight and wind force, and fermentation heat.

The "low moisture biomass" of the present invention refers to biomass containing moisture of 50% or less, preferably 15% or less. When the moisture is 15% or less, the combustion heat quantity of dry-distilled gas, which is generated during the thermal decomposition of the low moisture biomass, becomes larger, and sufficient heat quantity can thereby be acquired for drying the high moisture biomass to the moisture percentage of around 15%.

The material of "low moisture biomass" can be, for example, deforestation wood, thinned wood, pruned scraps of roadside trees or park trees, wood chips or pellets of wasted building wood, sawdust, food residue such as stems of corn, sugarcane and tomato, chaff, palm kernel shells, agricultural scraps such as wheat straw and rice straw, and industrial scraps containing cellulose, but it shall not be limited to these.

The "high-moisture biomass" of the present invention refers to biomass containing moisture of 50% or more, preferably 70% or more. As a matter of course, the dried biomass can be manufactured more easily when the high moisture biomass contains less moisture. However, when the moisture percentage is relatively low such as between 50% and 70%, carbonization processing can be done efficiently even when a conventional method is used instead of the carbonization method of the present invention. Therefore, it is preferable to apply the present invention to high moisture biomass containing moisture of 70% or more.

The material of the "high moisture biomass" can be, for example, sludge, digested sludge after methane fermentation, livestock feces/urine, and organic wastes such as food residue, but it shall not be limited to these.

### Brief Description of Drawings

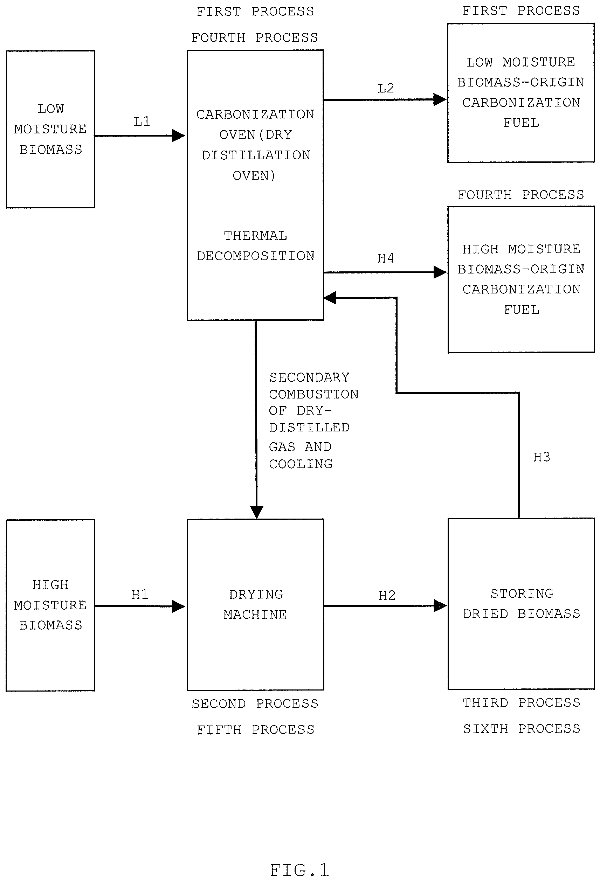

FIG.1 is a block diagram illustrating a carbonization method of the present invention.

### Description of Embodiments

An embodiment of the carbonization method of the present invention will be discussed.

As shown in FIG. 1, the carbonization method of the present invention includes at least first through sixth processes and the method can be executed with smallest improvement, addition of devices or the like to an existing carbonization apparatus equipped with a drying machine and a carbonization oven (dry-distillation oven). In FIG. 1, L1 and L2 are assigned for paths where low moisture biomass changes to carbonization fuel, and H1 through H4 are assigned for paths where high moisture biomass changes to carbonization fuel.

In the first process, low moisture biomass-origin carbonization fuel and dry-distilled gas are obtained by thermally decomposing the low moisture biomass in a carbonization oven.

Specifically, one or multiple kinds of low moisture biomass containing low moisture is supplied beforehand into a carbonization oven of the existing carbonization apparatus. Then the biomass is thermally decomposed for obtaining low moisture biomass-origin carbonization fuel, and dry-distilled gas containing CO, H2, CH4 or the like is generated. The obtained carbonization fuel is extracted from the carbonization oven in adequate timing during the first thorough third processes.

In the second process, dried biomass is obtained by drying high moisture biomass in the drying machine using high-temperature gas generated by secondary combustion of the dry-distilled gas obtained in the first process.

Specifically, high-temperature gas is generated by supplying oxygen (air) for combusting the dry-distilled gas obtained in the first process. Then the high-temperature gas is adjusted to an adequate temperature by mixing the gas with air in a flow channel from the carbonization oven to the drying machine as necessary, and is introduced into the drying machine. Dried biomass is obtained by drying one or multiple kinds of high moisture biomass, which is supplied into the drying machine beforehand, and by evaporating the moisture with the exposure to the high-temperature gas.

In the third process, the dried biomass obtained in the second process is stored temporally as stock. If the existing carbonization apparatus has a suitable area for storage, the biomass can be stored in this area. If the existing carbonization apparatus does not have a suitable area, an additional area needs to be prepared. Preferably, the storage area has a roof to prevent the stock from being exposed to rain or dew for maintaining a dried state.

After continuously performing the first through third processes for a predetermined period, the fourth through sixth processes are executed. That is, in the present invention, the first through third processes and the fourth through sixth processes are not performed simultaneously in a single carbonization apparatus. As a matter of course, each of the first through third processes is performed simultaneously in the carbonization apparatus.

In the fourth process, high moisture biomass-origin carbonization fuel and dry-distilled gas are obtained by thermally decomposing the dried biomass stored as stock (and dried biomass stored as stock in the sixth process discussed later) in the same carbonization oven as the one used in the first process.

Specifically, the stored dried biomass is supplied into the existing carbonization oven used in the first process. Low moisture biomass-origin carbonization fuel is not residual in the carbonization oven at the beginning of the fourth process, because the low moisture biomass-origin carbonization fuel is extracted from the carbonization oven at adequate timing during the first through third processes as described above. That is, the low moisture biomass and the high moisture biomass (dried biomass) are not mixed inside the carbonization oven according to the present invention.

Then, high moisture biomass-origin carbonization fuel is obtained and the dry-distilled gas is generated as well by thermally decomposing the dried biomass in the carbonization oven. The obtained carbonization fuel is extracted from the carbonization oven at adequate timing during the fourth through sixth processes.

In the fifth process, dried biomass is obtained by drying the high moisture biomass in the drying machine using high-temperature gas generated by secondary combustion of the dry-distilled gas obtained in the fourth process.

Specifically, high-temperature gas is generated by supplying oxygen (air) to the dry-distilled gas obtained in the fourth process for combustion, similarly to the second process. Then the high-temperature gas is adjusted to an adequate temperature by mixing the gas with air in a flow channel from the carbonization oven to the drying machine as necessary, and is introduced into the drying machine. Dried biomass is obtained by drying one or multiple kinds of high moisture biomass, which is supplied into the drying machine beforehand, and by evaporating the moisture with the exposure to the high-temperature gas.

In the sixth process, the dried biomass obtained in the fifth process is stored temporally as stock together with the dried biomass obtained in the second process.

When the sixth process is finished, the processing is repeated from the forth process again for thermally decomposing the stored dried biomass in the carbonization oven. As a matter of course, each of the fourth through sixth processes is performed simultaneously in the carbonization apparatus.

The amount of the dried biomass stored as stock is reduced gradually when the three processes consisting of the fourth through sixth processes are performed continuously for a predetermined time, because the amount of the dried biomass supplied for primary fuel in the fourth process is larger than the amount of the dried biomass newly obtained in the fifth process. Therefore, an operator temporally terminates the three processes consisting of the fourth through sixth processes and resumes the three processes consisting of the first through third processes for replenishing the dried biomass as stock. A series of operations according to the present invention, including this operation, does not have to be performed based on determination of the operator, and can be performed automatically by controls of a computer.

### INDUSTRIAL APPLICABILITY

The present invention relates to a carbonization method in which carbonization processing based on dry-distillation of high moisture biomass can be efficiently performed without adding a major improvement to an existing carbonization apparatus, and has industrial applicability.

## Claims

1. A carbonization method in which
three processes are performed continuously for a predetermined period including:
a first process of obtaining low moisture biomass-origin carbonization fuel and dry-distilled gas by thermally decomposing low moisture biomass in a carbonization oven;
a second process of obtaining dried biomass by drying high moisture biomass in a drying machine using high-temperature gas obtained by secondary combustion of the dry-distilled gas obtained in the first process; and
a third process of storing the dried biomass obtained in the second process;
and
thereafter three processes are performed continuously for a predetermined period including:
a fourth process of obtaining high moisture biomass origin-carbonization fuel and dry-distilled gas by thermally decomposing the stored dried biomass in the same carbonization oven as the one used in the first process;
a fifth process of obtaining dried biomass by drying high moisture biomass in the drying machine using high-temperature gas obtained by secondary combustion of the dry-distilled gas obtained in the fourth process; and
a sixth process of storing the dried biomass obtained in the fifth process.

2. The carbonization method as claimed in Claim 1, wherein the high moisture biomass is organic waste including at least one of sludge, livestock feces/urine, and food residue.

3. The carbonization method as claimed in any one of Claims 1 and 2, wherein the low moisture biomass is organic waste at least one of chaff, palm kernel shells, and wood.
